# EUROPEAN PATENT SPECIFICATION

(11) **EP 3 855 311 B1**
(45) Date of publication and mention of the grant of the patent: **14.02.2024**
(21) Application number: 19861986.8
(22) Date of filing: 20.09.2019
(51) Int. Cl.: G06F 9/445, G06F 3/0482, G06F 3/04817, G06F 3/04842, G06F 3/0483, G06F 3/04845, G06F 3/04883, G06F 9/451

(54) **METHOD AND DEVICE FOR STARTING APPLICATION**
VERFAHREN UND VORRICHTUNG ZUM STARTEN EINER ANWENDUNG
PROCÉDÉ ET DISPOSITIF DE DÉMARRAGE D'APPLICATION

(30) Priority: 20.09.2018 CN 201811099955
(43) Date of publication of application: 28.07.2021
(73) Proprietor: HUAWEI TECHNOLOGIES CO., LTD., Shenzhen, Guangdong 518129 (CN)
(72) Inventor: DONG, Jianming, Shenzhen, Guangdong 518129 (CN); CHEN, Shanxi, Shenzhen, Guangdong 518129 (CN); LI, Rui, Shenzhen, Guangdong 518129 (CN); HUANG, Xueyan, Shenzhen, Guangdong 518129 (CN)
(74) Representative: Gill Jennings & Every LLP
(86) International application number: PCT/CN2019/106952
(87) International publication number: WO 2020/057631

(56) References cited:
- CN-A- 102 279 767
- CN-A- 103 513 969
- CN-A- 105 630 367
- CN-A- 106 020 645
- CN-A- 107 560 610
- CN-A- 109 491 560
- CN-B- 103 513 969
- US-A1- 2011 167 364

## Description

### TECHNICAL FIELD

Embodiments of this application relate to the field of terminal technologies, and in particular, to an application startup method and apparatus.

### BACKGROUND

With continuous development of science and technology, a plurality of applications may be installed and run on a same terminal device at the same time, and this may greatly facilitate user's life.

In the prior art, when using a terminal device, a user usually needs to switch back and forth between a plurality of installed applications. Even when using a same application, jump between different interfaces is also required. For example, the user plans to go to three places tomorrow. The user first goes from a place A to a place B to see an exhibition in an exhibition hall, then goes from the place B to a place C to have a meal in a restaurant, and then goes from the place C to a place D to do sinterfaces in a reserved venue. To plan an optimal travel schedule, the user usually uses a map to check a route the night before, and determines to take a subway to go from the place A to the place B, take a taxi to go from the place B to the place C, and take a bus to go from the place C to the place D. After planning the schedule, the user needs to find the map application again when really travelling the next day, enter a name of the place B to check a route again so as to determine a name of a destination subway station and a transfer route this time, enter a name of the place C again to start a query of a route from B to C for taking a taxi, and enter a name of the place D again to determine a name of a bus station in the place D and a transfer route.

In the prior art, the user needs to search a plurality of applications for a corresponding application and open the corresponding application, and then continually enter various keywords to search for content in the application. This makes an operation of the user more cumbersome, and leads to poor user experience. CN103513969 B discloses a method for establishing an application program entry. Task information, an application program function interface corresponding to the task information, and a screen capture picture are obtained, then a corresponding relation between the screen capture picture and the application program function interface is established to enable the screen capture picture to be preserved as the application program entry, and when the application program entry is triggered, the application program function interface is called according to the corresponding relation to allow a user to operate.

CN107560610 A discloses an information display method and information display system used by electronic equipment.

### SUMMARY

This application provides an application startup method and apparatus, to simplify an operation of opening an application by a user, thereby improving user experience. The invention is defined by the appended claims.

According to a first aspect, an application startup method is provided according to claim 1.

After receiving the first touch operation of a user for the picture, a terminal device may determine, based on the anchor information related to the picture, the application corresponding to the picture, and start the application. In this way, when needing to open a plurality of applications, the user can quickly start corresponding applications by using a plurality of stored pictures, avoiding a phenomenon that the user needs to search all installed applications in the prior art. This can simplify an operation of opening the applications by the user, thereby improving user experience.

There may be one or more applications corresponding to the content information.

If the terminal device determines that there are at least two applications corresponding to the content information of the picture, the at least two determined applications are displayed in the application selection interface, so that the user performs selection based on an actual requirement of the user. This can improve flexibility of determining the application.

The receiving a first touch operation for a picture includes:
receiving the first touch operation performed on the pre-stored picture.

In this solution, a plurality of pictures are pre-stored on the terminal device. To open an application, the user may directly perform a first touch operation on a pre-stored picture corresponding to the application. This can simplify an operation of opening the application by the user, thereby improving user experience.

The anchor information further includes a marked point of interest POI in the picture;
after the receiving the first touch operation performed on the pre-stored picture, the method further includes:
displaying a POI selection interface based on the first touch operation, where the POI selection interface includes at least one POI in the picture; and
receiving a second touch operation performed in the POI selection interface, where the second touch operation is used to instruct the user to select a target POI from the at least one POI; and
the determining, based on anchor information related to the picture, an application corresponding to the picture includes:
   determining, based on the target POI included in the anchor information, the application corresponding to the picture.

In this solution, the POI is one or more pieces of feature data in the picture. The feature data may come from longitude and latitude values, one or more addresses in a map, one or more names in a map, one or more keywords in a document, one or more pictures or other media content in a document, or any one or more pieces of feature data obtained by capturing a screenshot during playing of media content.

When saving a picture, the terminal device obtains a POI in the picture, and displays the obtained POI. The user selects a target POI from at least one POI in the POI selection interface based on an actual requirement of the user. In this case, the terminal device determines a corresponding application based on the target POI. This enables the user to have a plurality of choices, thereby improving flexibility.

The determining, based on the target POI included in the anchor information, the application corresponding to the picture includes:
determining, based on a correspondence between a POI and an application, an application corresponding to the target POI; and
determining the application corresponding to the target POI as the application corresponding to the picture.

In the foregoing solution, the correspondence between a POI and an application may be manually added by the user in advance, embedded in the system, or obtained through model training. In addition, one POI may correspond to one or more applications. After the user selects the target POI, the terminal device determines, based on the correspondence between a POI and an application, the application corresponding to the target POI.

Optionally, the displaying, in the application, an operation interface corresponding to the picture includes:
displaying, in the application corresponding to the picture, an operation interface corresponding to the target POI.

Optionally, before an operation instruction of the user for the picture is received, the method further includes:
receiving a fifth touch operation for saving the picture;
obtaining, based on the fifth touch operation, the anchor information related to the picture; and
saving the picture and the anchor information related to the picture.

After receiving the fifth touch operation for saving the picture, the terminal device obtains the anchor information related to the picture, and saves the picture and the anchor information related to the picture. In this way, the terminal device can quickly start a corresponding application based on the saved picture and anchor information related to the picture.

Optionally, the saving the picture and the anchor information related to the picture includes:
displaying a prompt interface based on the fifth touch operation, where the prompt interface includes prompt information, and the prompt information is used to prompt the user whether to save the picture and the anchor information related to the picture;
receiving a sixth touch operation performed in the prompt interface; and
saving, based on the sixth touch operation, the picture and the anchor information related to the picture.

In this solution, after receiving the fifth touch operation triggered by the user, the terminal device displays the prompt interface, where the prompt information in the prompt interface is used to prompt the user whether to save the picture and the anchor information related to the picture. When the user chooses to save, the terminal device saves the picture and the anchor information related to the picture, thereby improving user experience.

Optionally, the saving, based on the sixth touch operation, the picture and the anchor information related to the picture includes:
determining, based on the sixth touch operation, the identification information of the application to which the picture belongs;
determining, based on the identification information of the application to which the picture belongs, whether there is a picture list corresponding to the identification information; and
if there is the picture list corresponding to the identification information, adding the picture and the anchor information related to the picture to the picture list.

In this solution, for convenience of the user to view, when saving, based on the sixth touch operation triggered by the user, the picture and the anchor information related to the picture, the terminal device may perform classification based on the identification information of the application to which the picture belongs, that is, save pictures in a same application as a list.

Optionally, the method further includes:
if there is no picture list corresponding to the identification information, establishing a picture list corresponding to the identification information; and
adding the picture and the anchor information corresponding to the picture to the established picture list.

In this solution, if there is no picture list corresponding to the identification information on the terminal device, the terminal device may establish a new picture list corresponding to the determined identification information, and add the picture and the anchor information related to the picture to the newly established picture list. Based on the identification information of the application to which the picture belongs, the picture is classified and saved. This makes it more convenient for the user to view the picture, thereby improving user experience.

According to a second aspect, an application startup apparatus is provided according to claim 7.

The apparatus provided in the second aspect of this application may be a terminal device. The terminal device has a function of implementing the application startup method in any one of the foregoing aspect or the possible manners of the foregoing aspect. The function may be implemented by hardware, or may be implemented by hardware executing corresponding software. The hardware or the software includes one or more units corresponding to the foregoing function.

The terminal device includes a processing unit, a transceiver unit, and a display unit. The processing unit may be a processor. The transceiver unit may be a transceiver, and the transceiver includes a radio frequency circuit. The display unit may be a display. Optionally, the terminal device further includes a storage unit, and the storage unit may be, for example, a memory. When the terminal device includes the storage unit, the storage unit is configured to store a computer executable instruction. The processing unit is connected to the storage unit, and the processing unit executes the computer executable instruction stored in the storage unit, so that the terminal device is enabled to perform the application startup method in any one of the foregoing aspect or the possible manners of the foregoing aspect.

The processor described above may be a central processing unit (central processing unit, CPU), a microprocessor, or an application-specific integrated circuit (application specific integrated circuit, ASIC), or may be one or more integrated circuits configured to control execution of a program of the application startup method in any one of the foregoing aspect or the possible manners of the foregoing aspect.

According to a third aspect, an embodiment of this application provides a terminal device, including a memory, a processor, and a display. The display is configured to display an operation interface, and the memory is configured to store a computer program. The computer program is run on the processor, so that the terminal device implements the application startup method described in the first aspect.

According to a fourth aspect, an embodiment of this application further provides a computer readable storage medium, where the computer readable storage medium stores a computer program, and the computer program is executed by a processor to perform the application startup method described in the first aspect.

According to a fifth aspect, an embodiment of this application further provides a computer program product that includes an instruction. When the computer program product is run on a computer, the computer is enabled to perform the application startup method provided in the first aspect of the embodiments of this application.

According to a sixth aspect, an embodiment of this application further provides a chip, where the chip stores a computer program, and the computer program is executed by a processor to perform the application startup method provided in the first aspect.

### BRIEF DESCRIPTION OF DRAWINGS

FIG. 1 is an architectural diagram of a system of an application startup method according to an embodiment of this application;
FIG. 2 is a schematic flowchart of an embodiment 1 of an application startup method according to an embodiment of this application;
FIG. 3 is a schematic diagram of performing a first touch operation on a pre-stored picture;
FIG. 4 is another schematic diagram of performing a first touch operation on a pre-stored picture;
FIG. 5 is a schematic diagram of a picture management interface;
FIG. 6 is a schematic diagram of an anchor selection interface;
FIG. 7A and FIG. 7B are a schematic diagram of saving a picture and anchor information related to the picture;
FIG. 8A and FIG. 8B are another schematic diagram of saving a picture and anchor information related to the picture;
FIG. 9A and FIG. 9B are still another schematic diagram of saving a picture and anchor information related to the picture;
FIG. 10A and FIG. 10B are a schematic diagram of viewing a picture;
FIG. 11 is a schematic diagram of an application selection interface;
FIG. 12 is a schematic diagram of a POI selection interface;
FIG. 13A and FIG. 13B are another schematic diagram of a POI selection interface;
FIG. 14 is a schematic structural diagram of an application startup apparatus 10 according to an embodiment of this application;
FIG. 15 is another schematic structural diagram of an application startup apparatus 20 according to an embodiment of this application;
FIG. 16 is still another schematic structural diagram of an application startup apparatus 30 according to an embodiment of this application; and
FIG. 17 is a schematic structural diagram of an implementation of a terminal device according to an embodiment of this application.

### DESCRIPTION OF EMBODIMENTS

In the following, some terms in this application are described, so as to help a person skilled in the art have a better understanding.
(1) Terminal device: is also referred to as user equipment (user equipment, UE), a mobile device, a user terminal, a terminal, wireless communications equipment, a user agent, or a user apparatus. The terminal device may be a mobile phone, a tablet, a laptop, a smartwatch, a television, or another electronic device with a display, where the another electronic device is only required to have a function of opening an application (application, APP).

By way of example but not limitation, in embodiments of this application, the terminal device may be alternatively a wearable device. The wearable device may also be referred to as a wearable intelligent device, and is a collective name of wearable devices, such as glasses, gloves, watches, clothes, and shoes, obtained after a wearable technology is used for intelligent design and development of daily wear. The wearable device is an interfaceable device that is directly worn or integrated into clothes or an accessory of a user. The wearable device not only is a hardware device, but also implements a strong function through software supinterface, data exchange, and cloud exchange. Wearable intelligent devices generally include a large full-featured wearable device, such as a smartwatch or smart glasses, capable of implementing all or some functions without relying on a smartphone; and a wearable device, such as various smart bands performing vital sign monitoring and smart jewelry, that concentrates only on a particular type of application function and needs to be used together with another device such as a smartphone.

In the embodiments of this application, the terminal device usually supinterfaces a plurality of applications, such as a text processing application, a telephone application, an e-mail application, an instant messaging application, a photo management application, a web browsing application, a digital music player application, and/or a digital video player application.

(2) Anchor: indicates that an application stays in a specific state or re-runs from a specific state. In particular, the application staying in or re-running from a specific state means that the application stays in a content location that a user focuses on, or re-runs from content that the user has focused on.

(3) Application (application, APP): runs in a user mode, may interact with a user, and generally has a visual user interface.

(4) Point of interest (POI): usually refers to a landmark or a scenic spot on an electronic map, and includes a name, a category, longitude, latitude, an altitude, or the like.

(5) Anchor picture: is a picture with anchor information. All pictures in this application are anchor pictures.

It can be understood by a person skilled in the art that an application startup method provided in the embodiments of this application may be applied to an application scenario of how to start an APP on a terminal device, and in particular, to an application scenario of how to quickly start an APP based on a picture.

In the prior art, when using a terminal device, a user usually needs to switch back and forth between a plurality of applications installed on the terminal device. Even when using a same application, jump between different interfaces is also required. Therefore, to start each application, the user needs to search a plurality of applications for an application that the user intends to open, and operate the application, and then continually enter various keywords to search for content in the application. This makes an operation of the user more cumbersome, and leads to poor user experience.

Considering these situations, the embodiments of this application propose an application startup method: After receiving a first touch operation for a picture, a terminal device determines, based on anchor information related to the picture, an application corresponding to the picture, where the anchor information includes at least one of the following information: identification information of the application to which the picture belongs, and content information of the picture; and starts the application corresponding to the picture, and displays, in the application, an operation interface corresponding to the picture. After receiving the first touch operation of a user for the picture, the terminal device may determine, based on the anchor information related to the picture, the application corresponding to the picture, and start the application. In this way, when needing to open a plurality of applications, the user can quickly start corresponding applications by using a plurality of stored pictures, avoiding a phenomenon that the user needs to search all installed applications in the prior art. This can simplify an operation of opening the applications by the user, thereby improving user experience.

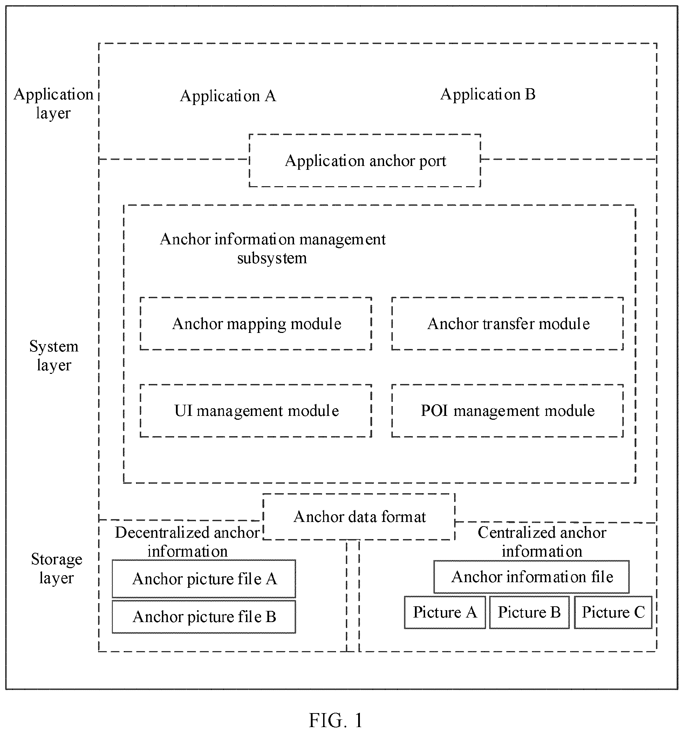

FIG. 1 is an architectural diagram of a system of an application startup method according to an embodiment of this application. As shown in FIG. 1, the system includes an application layer, a system layer, and a storage layer. The application layer is configured to run various applications, such as an application A and an application B. The system layer is configured to implement various system functions. The storage layer is configured to store various data required in a running process of the system. In this embodiment of this application, the storage layer is mainly configured to store an anchor data format, an anchor picture, and anchor information.

Specifically, in this embodiment of this application, in the system layer, an operation of a user is enabled through an application anchor interface, anchor information management is completed by using the anchor data format, and another function and management of a mapping between an application and a picture are implemented by using an anchor management subsystem.

The application anchor interface is an interface for saving, based on current application data, anchor information related to a picture. For example, the current application data is mainly data of a currently running application, and the application data includes an "address of a data source". Further examples of an "address of a data source" type include: a name of a map data server in a map application, a URL of a web page in a browser application, a path of a document in a PDF viewing application, a path of a media file in a media player application, and the like. The anchor information may be a current application, current content, or data related to current content. The anchor information includes the address of the data source and a current location of browsed content. The "current location" may be further instantiated as follows: longitude and latitude of a current browsed location and starting and ending points of a checked route in a zoom ratio in the map application, a browsed location of a current web page in the browser application, a page number of a document or a book opened in a reading application, a time point of opening a media file in a media player, details of a merchant/place in a comment application, and the like.

The system further includes an anchor saving interface, where the anchor saving interface may save current data of an application and associated data of the application as anchor information. In this application, the anchor information is persistent.

In addition, the system further includes an anchor restoration interface and an anchor synchronization interface. The anchor restoration interface is an interface for extracting the current data of the application and the associated data of the application from the anchor information. The anchor synchronization interface is an interface switching interface. In this application, a picture is a medium for the user to save anchor information from an application and start the application from the anchor information. When the user starts an application by using a picture, the interface is configured to determine whether the application completes a restoration process, and switch the application from a background to a foreground after the restoration process is completed.

Further, the anchor information management subsystem includes an anchor mapping module, an anchor transfer module, a user interface (user interface, UI) management module, and a POI management module. The anchor mapping module is configured to manage a mapping relationship between anchor information and a picture. The anchor transfer module is configured to transfer anchor information to different applications to start the different applications. The UI management module is configured to manage a user interface. The POI management module is configured to manage a POI or the like in a picture.

In addition, when the user determines to save a picture in an application, the anchor management subsystem obtains anchor information from the current application through the anchor saving interface, formats the information into an anchor data format, and saves the anchor data format.

In this embodiment of this application, the anchor information may be stored in the following manners: In a first manner, the anchor information is stored in a picture file corresponding to each picture, so that anchor information related to the picture may be directly obtained from the picture file corresponding to the picture. In a second manner, anchor information related to each picture is stored in an anchor information file in a centralized manner, and a correspondence between anchor information and each picture needs to be stored. In this way, the anchor information related to the picture may be obtained from the anchor information file based on the correspondence.

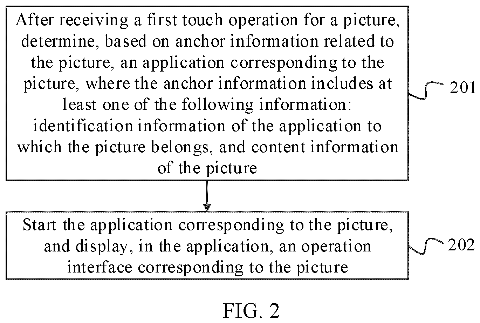

Based on the system architecture shown in FIG. 1, FIG. 2 is a schematic flowchart of an embodiment 1 of an application startup method according to an embodiment of this application. As shown in FIG. 2, the method in this embodiment may include the following steps.

Step 201: After receiving a first touch operation for a picture, determine, based on anchor information related to the picture, an application corresponding to the picture, where the anchor information includes at least one of the following information: identification information of the application to which the picture belongs, and content information of the picture.

Step 202: Start the application corresponding to the picture, and display, in the application, an operation interface corresponding to the picture.

In this embodiment, the first touch operation may be, for example, a click operation, a touch and hold operation, or a slide operation.

The anchor information includes at least one of the following information: the identification information of the application to which the picture belongs, and the content information of the picture.

In a possible implementation, the receiving a first touch operation for a picture may include receiving the first touch operation performed on a pre-stored picture.

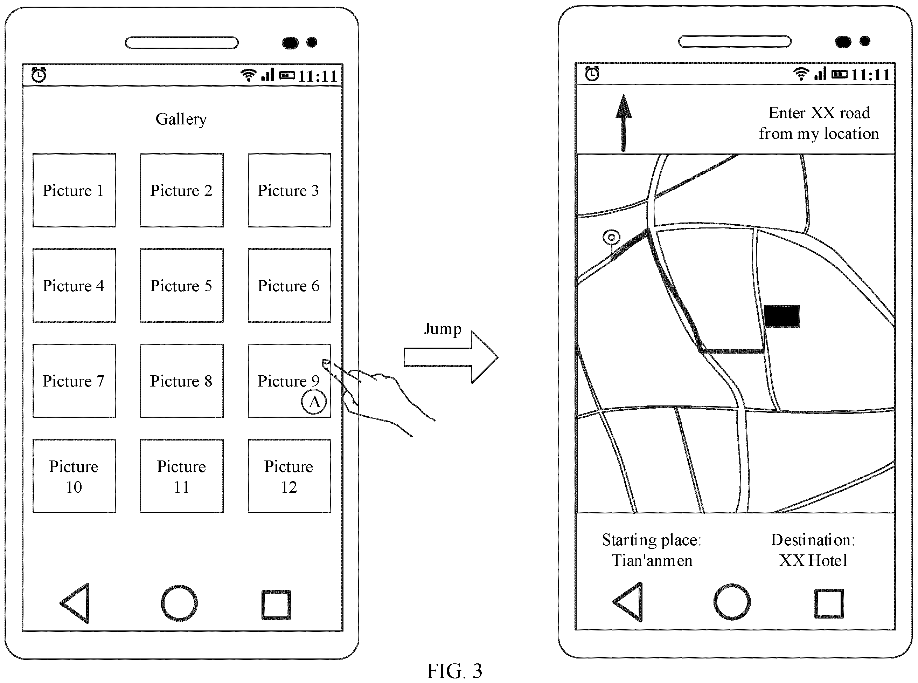

Specifically, a plurality of pictures are pre-stored on a terminal device, and a user may directly perform a related operation on a pre-stored picture, for example, click the picture, touch and hold the picture, or slide the picture. FIG. 3 is a schematic diagram of performing a first touch operation on a pre-stored picture. As shown in FIG. 3, a picture 1, a picture 2, ..., and a picture 12 are pre-stored on the terminal device, and these pictures are all pictures with anchor information. When intending to open an application, the user may perform the first touch operation on a pre-stored picture with anchor information, for example, may click a picture 9 or the like. The terminal device obtains anchor information of the picture 9, determines, based on the anchor information of the picture 9, an application corresponding to the picture 9, starts the application, and displays, in the application, an operation interface corresponding to the picture 9.

For example, if the picture 9 displays map information, the terminal device opens a map application and displays a navigation interface in the map application, where a starting place may be a current location such as "Tian'anmen", and a destination is a place such as "XX Hotel" included in the picture.

For another example, if the picture 9 displays text information and the terminal device determines that the application corresponding to the picture 9 is a web application, the terminal device determines, based on the text information, a URL including the text information, so that the terminal device starts the web application and opens, in the web application based on the URL, a web page including the text information. How to determine the application corresponding to the picture is described below in detail.

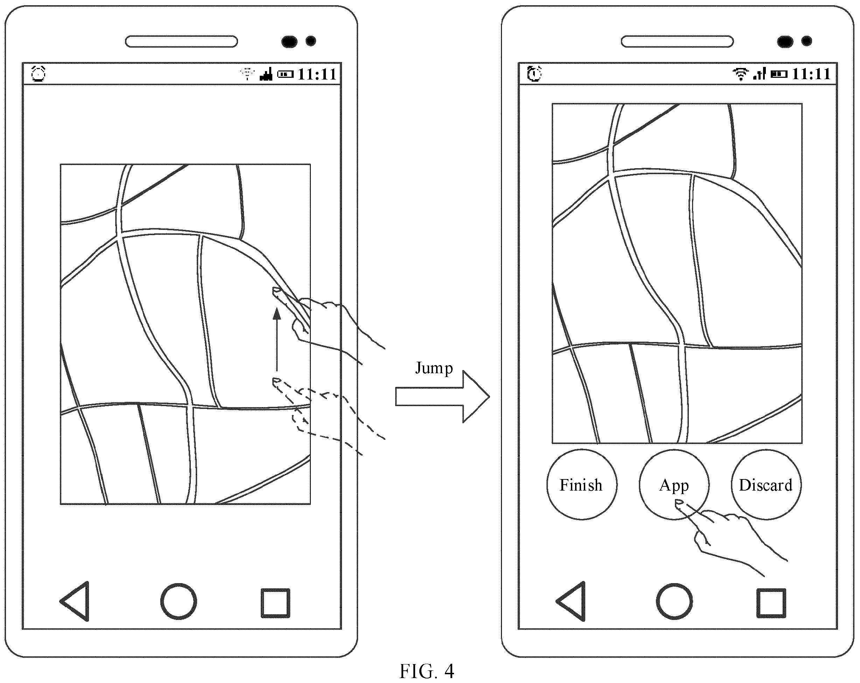

FIG. 4 is another schematic diagram of performing a first touch operation on a pre-stored picture. A difference between the operation shown in FIG. 4 and the operation shown in FIG. 3 is that the first touch operation shown in FIG. 3 may be a click operation or a touch and hold operation, and the first operation shown in FIG. 4 may be a slide operation. When the user continues to slide the picture, the terminal device displays a prompt interface, and the prompt interface includes operation buttons of "Finish", "App", and "Discard". When the user clicks "Finish", the terminal device may mark the picture as finished. When the user clicks "App", the terminal device starts an application corresponding to the picture. When the user clicks "Discard", the terminal device deletes the picture.

It should be noted that on the terminal device, during picture management, the foregoing anchor picture used to open the application and another non-anchor picture may be stored in one folder or in different folders, or the anchor picture used to open the application may be managed by using an application icon. Specifically, as shown in FIG. 3, if the anchor picture used to open the application and another non-anchor picture are stored in one folder, identification information, such as a letter A in a lower right corner of FIG. 3, may be added to the anchor picture for the user to distinguish.

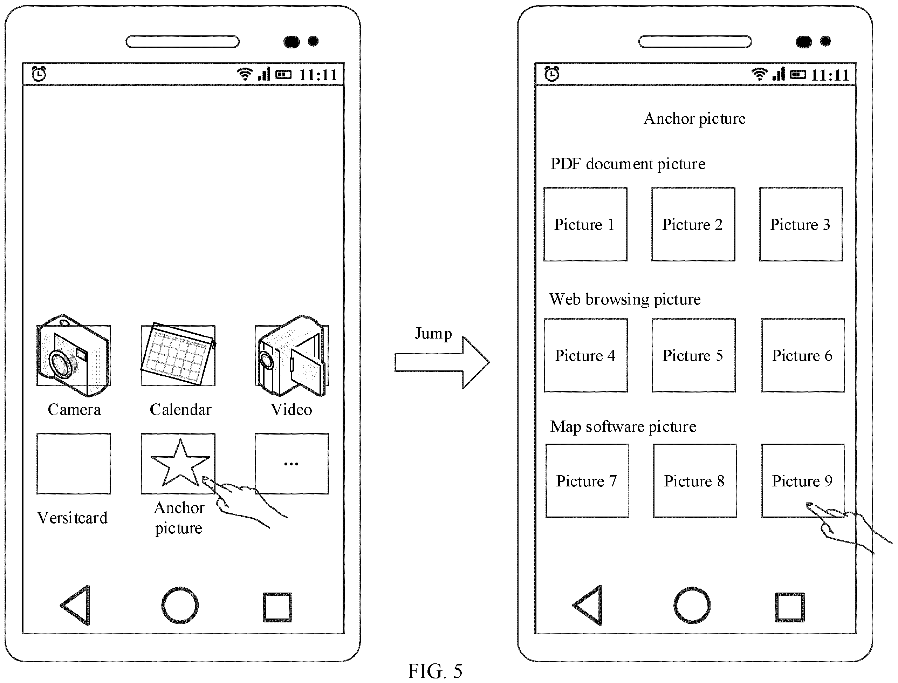

FIG. 5 is a schematic diagram of a picture management interface. As shown in FIG. 5, the anchor picture used to open the application may be managed by using the application. For example, when an application icon "anchor picture" is clicked, the terminal displays all anchor pictures saved by the user. Optionally, for convenience of the user to view, these pictures may be classified and stored based on identification information of applications to which the pictures belong, for example, may be classified into a "PDF document picture", a "web browsing picture", and a "map software picture". In this way, the user may perform the first touch operation based on a displayed picture.

In another possible implementation, the user may select the anchor information by clicking an application icon, to perform the first touch operation on the picture. Specifically, before receiving the first touch operation for the picture, the terminal device receives a third touch operation performed on the application icon, where the application icon corresponds to anchor information related to at least one picture; and displays an anchor selection interface for the picture based on the third touch operation. The anchor selection interface includes the anchor information related to the at least one picture. Accordingly, the receiving a first touch operation for a picture includes receiving the first touch operation performed in the anchor selection interface.

If the user saves at least one picture in an application, the terminal device associates anchor information related to these pictures with the application. In other words, an application icon of the application corresponds to the anchor information related to the at least one picture. After the user performs a third touch operation on the application icon of the application, the terminal device displays an anchor selection interface. The anchor selection interface includes the anchor information related to the at least one picture. The user selects a piece of anchor information from the anchor selection interface based on an actual requirement of the user. Because each piece of anchor information corresponds to one picture, selecting a piece of anchor information by the user is equivalent to selecting a picture corresponding to the anchor information. In this way, the terminal device determines, based on the anchor information selected by the user, the picture corresponding to the first touch operation performed by the user.

The anchor information related to these pictures is associated with the application, so that the application icon of the application corresponds to the anchor information related to the at least one picture. In this way, a plurality of statuses may be recorded in a commonly used application, and this may be convenient for the user to use and improve user experience.

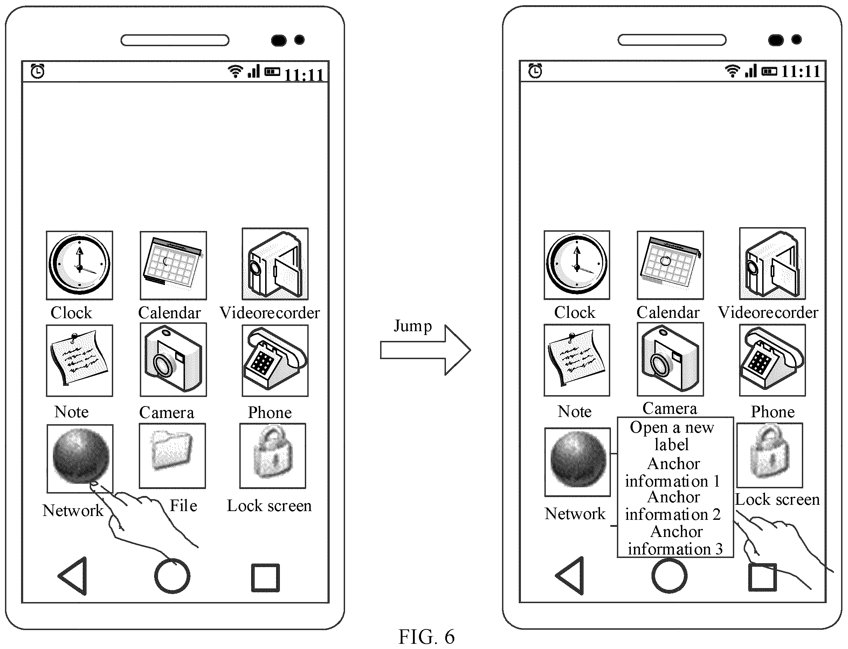

FIG. 6 is a schematic diagram of an anchor selection interface. As shown in FIG. 6, if the user previously saves a picture 1, a picture 2, and a picture 3 in the web application, the terminal device obtains anchor information of the three pictures and separately associates the anchor information with the web application. After the user clicks the web application, the anchor selection interface appears. The anchor selection interface displays "anchor information 1", "anchor information 2", and "anchor information 3". The user selects one piece of anchor information from the three pieces of anchor information based on an actual requirement of the user. If the "anchor information 2" is selected, the terminal device determines a corresponding picture based on the "anchor information 2" selected by the user, so as to determine an application corresponding to the picture, start the application, and open, in the application, an operation interface corresponding to the determined picture. A specific implementation is similar to that shown in FIG. 3, and details are not described herein.

Further, no matter which of the foregoing manners is used to manage pictures, the pictures need to be saved in advance on the terminal device. In a possible implementation, the terminal device receives a fifth touch operation for saving a picture, obtains, based on the fifth touch operation, anchor information related to the picture, and then saves the picture and the anchor information related to the picture.

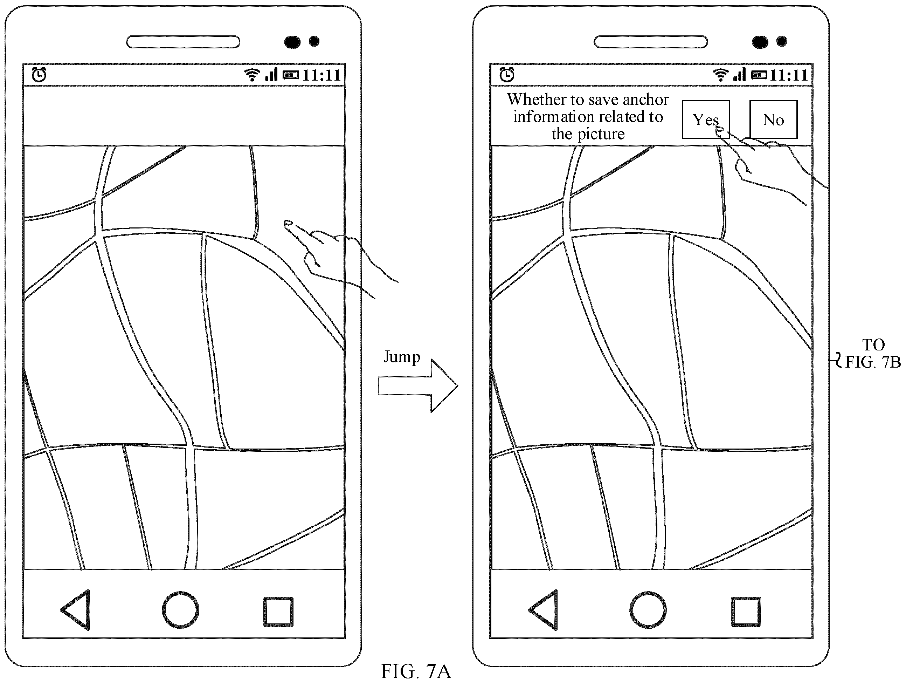

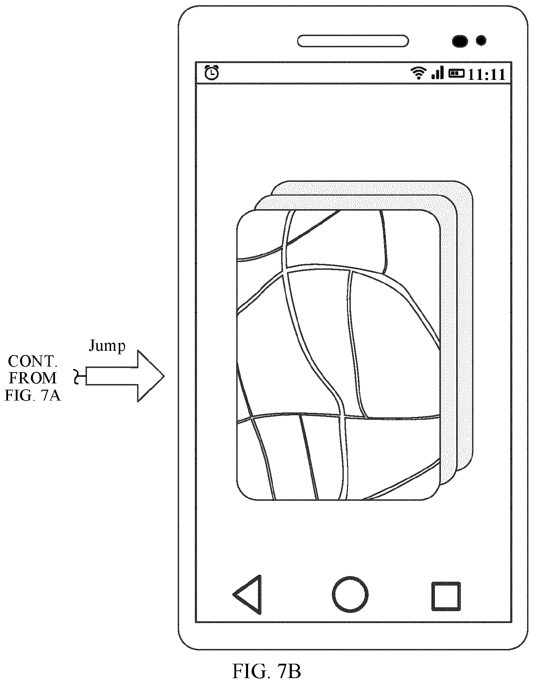

Specifically, FIG. 7A and FIG. 7B are a schematic diagram of saving a picture and anchor information related to the picture. As shown in FIG. 7A and FIG. 7B, the user may perform a fifth touch operation such as a click operation on a picture in an application. After receiving the fifth touch operation for saving the picture, the terminal device obtains anchor information related to the picture. If the anchor information includes identification information of the application to which the picture belongs, when obtaining the anchor information related to the picture, after receiving the fifth touch operation, the terminal device may determine the application in which the user performs the fifth touch operation on the picture, so as to obtain the identification information of the application.

If the anchor information includes content information of the picture, the terminal device may recognize the content information of the picture by using an image recognition method in the prior art. For example, content of the picture may be recognized by using a SIFT feature matching algorithm. For example, text, an image, or a map included in the picture is recognized. In addition, the terminal device may alternatively recognize the content information of the picture by capturing description information of the picture, for example, recognize the content information of the picture by grabbing audio information. For example, if the user performs a fifth touch operation on a frame of image in a video application, the terminal device grabs description information of the frame of image in audio information after receiving the fifth touch operation. If the grabbed description information is "the map information is updated", the terminal device may determine that content information of a picture corresponding to the frame of image is a map. It should be noted that the anchor information related to the picture may be alternatively obtained in another manner, as long as the identification information of the application to which the picture belongs or the content information of the picture can be obtained. A specific manner in which the terminal device obtains the anchor information related to the picture is not limited herein in this embodiment of this application.

Further, the terminal device needs to obtain a location, in the application, of the content of the picture. For example, if the application is a web application, the terminal device needs to obtain a URL corresponding to the content of the picture; if the application is a PDF application, the terminal device needs to obtain a page number or a line number of the content of the picture in a document; or if the application is a media application, the terminal device needs to obtain a location, a playing time, or the like of the content of the picture in a video.

Still referring to FIG. 7A and FIG. 7B, after obtaining the anchor information, the terminal device displays a prompt interface based on the fifth touch operation, where the prompt interface includes prompt information, and the prompt information is used to prompt the user whether to save the picture and the anchor information related to the picture. For example, "Whether to save the anchor information related to the picture" is displayed in the prompt interface. After receiving a sixth touch operation performed by the user in the prompt interface, the terminal device saves, based on the sixth touch operation, the picture and the anchor information related to the picture. For example, after the user clicks a control "Yes" in the prompt interface, the terminal device saves the picture and the anchor information related to the picture. In this case, the terminal device jumps to an interface of the saved picture.

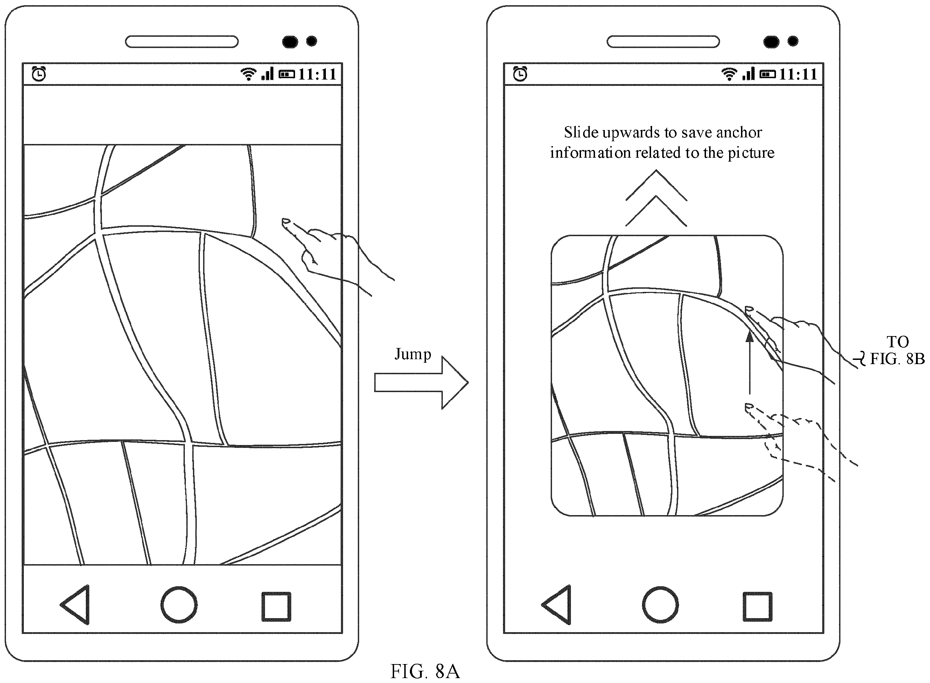

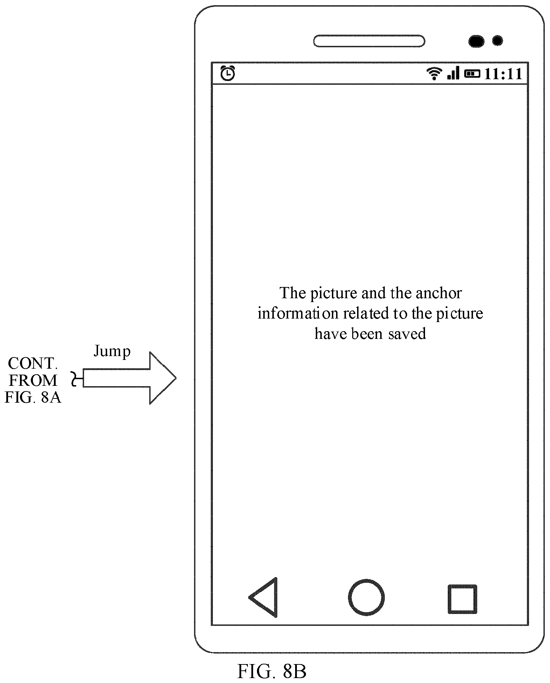

FIG. 8A and FIG. 8B are another schematic diagram of saving a picture and anchor information related to the picture. A difference between a saving manner shown in FIG. 8A and FIG. 8B and the saving manner shown in FIG. 7A and FIG. 7B is that manners of prompting the user to save the picture and the anchor information related to the picture are different. In FIG. 7A and FIG. 7B, the user is prompted that the picture and the anchor information related to the picture need to be saved by clicking a control in a prompt interface. In FIG. 8A and FIG. 8B, the user is prompted that the picture and the anchor information related to the picture need to be saved by sliding a picture in a prompt interface. The terminal device saves the picture and the anchor information related to the picture after receiving a sixth touch operation of sliding the picture in the prompt interface by the user. In this case, the terminal device jumps to an interface of the saved picture.

Further, for convenience of the user to view, when saving, based on the sixth touch operation triggered by the user, the picture and the anchor information related to the picture, the terminal device may perform classification based on the identification information of the application to which the picture belongs, that is, save pictures in a same application as a list (as shown in FIG. 5). Specifically, after receiving the sixth touch operation, the terminal device determines the identification information of the application to which the picture belongs; determines, based on the identification information of the application to which the picture belongs, whether there is a picture list corresponding to the identification information; and if there is the picture list corresponding to the identification information, adds the picture and the anchor information corresponding to the picture to the picture list.

Specifically, when the user determines that the picture needs to be saved, the terminal device determines the identification information of the application to which the picture belongs, and queries, based on the identification information, whether there is the picture list corresponding to the identification information. If there is the picture list corresponding to the identification information, the terminal device adds the picture and the anchor information corresponding to the picture to the found picture list. If the terminal device previously stores a picture in the application, there is the picture list corresponding to the identification information on the terminal device. For example, if the terminal device determines that the application to which the picture belongs is an application for opening a PDF document, and finds that there is a list of PDF document pictures in the terminal device, the terminal device may directly add the picture and the anchor information related to the picture to the list of PDF document pictures.

Further, if there is no picture list corresponding to the identification information, the terminal device establishes a picture list corresponding to the identification information, and adds the picture and the anchor information related to the picture to the established picture list.

Specifically, if there is no picture list corresponding to the identification information on the terminal device, the terminal device may establish a new picture list corresponding to the determined identification information, and add the picture and the anchor information related to the picture to the newly established picture list. For example, if the terminal device determines that the application to which the picture belongs is an application for opening a PDF document, and finds that there is no list of PDF document pictures on the terminal device, the terminal device newly establishes a list of PDF document pictures and adds the picture and the anchor information related to the picture to the newly established list of PDF document pictures.

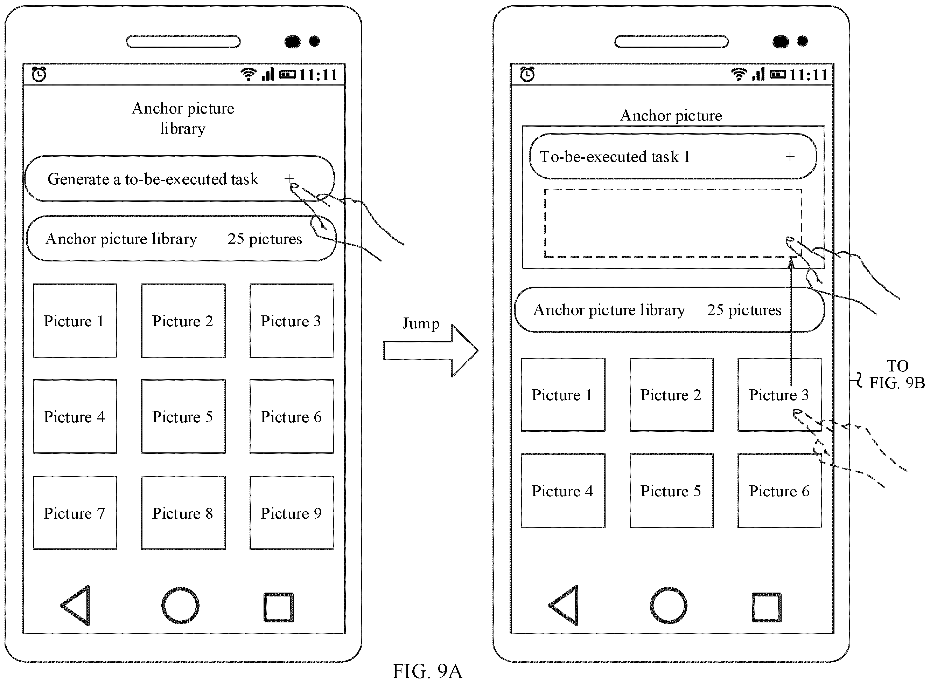

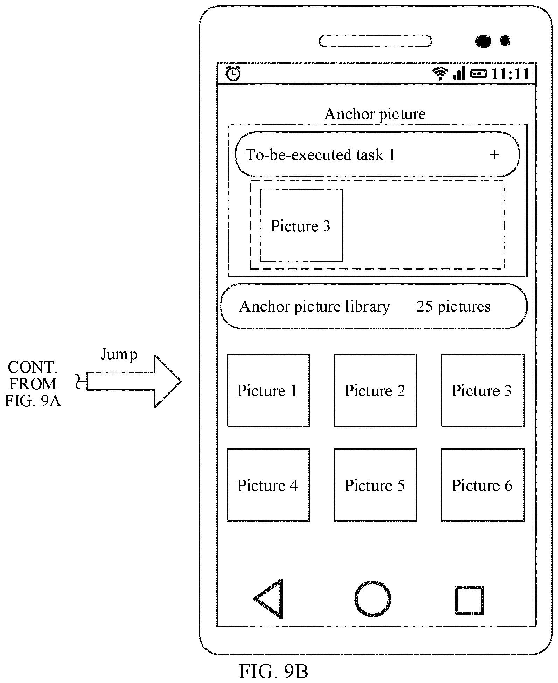

FIG. 9A and FIG. 9B are still another schematic diagram of saving a picture and anchor information related to the picture. A saving manner shown in FIG. 9A and FIG. 9B is mainly for a manner of managing a picture by using an application icon, and is about how to save, in advance, the picture and the anchor information related to the picture. As shown in FIG. 9A and FIG. 9B, a task creation operation button "+" is displayed in an upper part of an anchor management interface. When the user clicks the button "+" to create a task, a picture drag area (as shown by a dashed-line box in FIG. 9A and FIG. 9B) is displayed. The user may drag a picture to the dashed-line box in a dragging manner or the like, for example, may drag a picture 3 to the dashed-line box. For convenience of use, the application icon may be further sent to a lock screen or a desktop. Further, to save storage space, when the user no longer uses a picture, the user may choose to delete the saved picture. In addition, the terminal device may alternatively send prompt information to the user to prompt the user whether startup of an application corresponding to the picture is completed. If the user determines that the startup is completed, the terminal device deletes the picture. Further, to improve user experience, the user may alternatively customize a category, that is, the user may drag different pictures together based on an actual requirement of the user, to facilitate use.

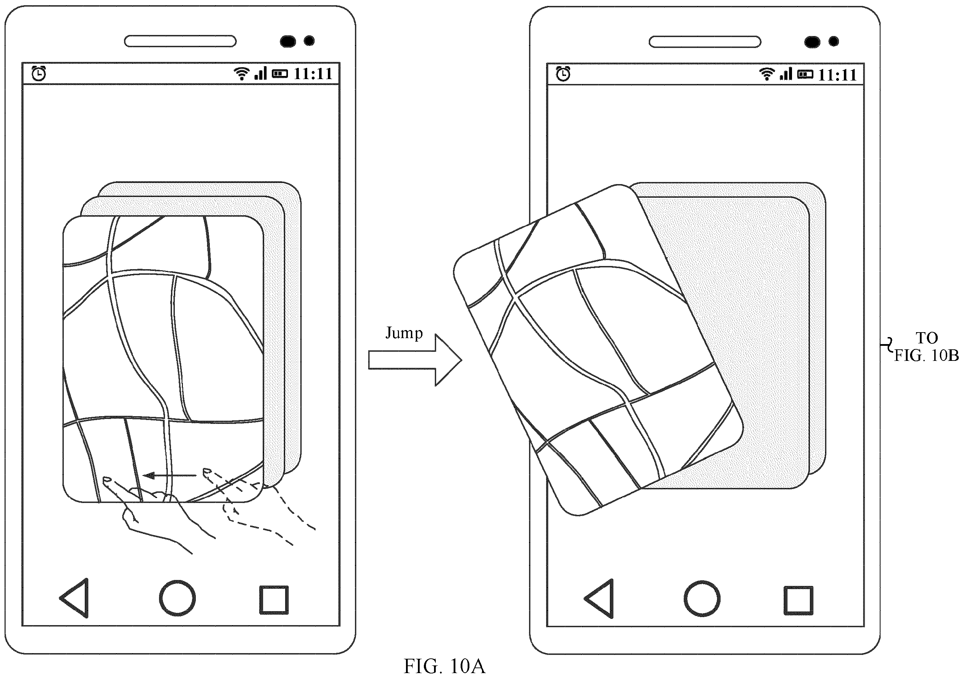

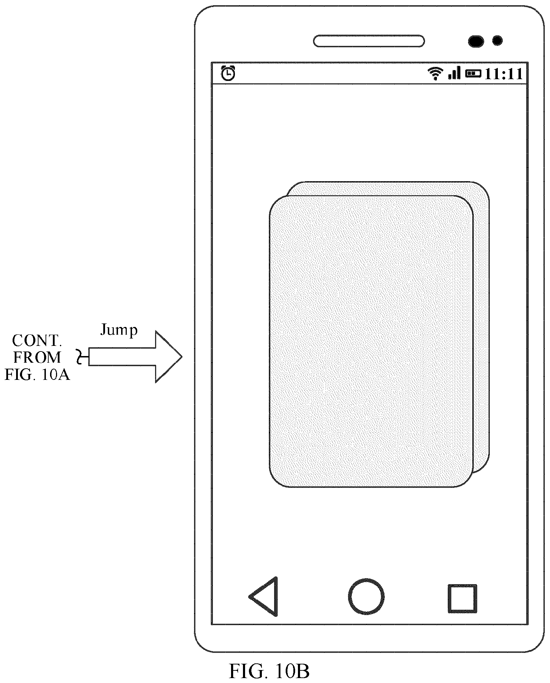

FIG. 10A and FIG. 10B are a schematic diagram of viewing a picture. As shown in FIG. 10A and FIG. 10B, after saving pictures, the user may view the stored pictures by sliding the pictures. For example, the saved pictures may be displayed in a cascading manner. When the user slides a picture to the left, an upper picture is moved away, and a lower picture is displayed, so that the user may view other pictures.

After the picture and the anchor information related to the picture are saved in advance, the terminal device obtains the anchor information related to the picture after receiving the first touch operation for the picture, and determines, based on the obtained anchor information, the application corresponding to the picture. The anchor information includes at least one of: the identification information of the application to which the picture belongs, and the content information of the picture. For example, the identification information of the application to which the picture belongs is identification information of an application generating the picture. For example, if a picture is saved from a map application, identification information of an application to which the picture belongs is identification information of the map application. In addition, the content information of the picture may include a type of content of the picture. For example, the content of the picture is text, a map, or an image.

In a possible implementation, when the anchor information includes the identification information of the application to which the picture belongs, the application corresponding to the identification information may be directly determined as the application corresponding to the picture.

Specifically, when the terminal device captures a picture from an application and saves the picture, the terminal device also saves identification information of the application. In this way, after detecting a first touch operation of the user for the picture, the terminal device directly determines, based on the saved identification information, the application corresponding to the identification information as the application corresponding to the picture.

In another possible implementation, when the anchor information includes the content information of the picture, the application corresponding to the picture may be determined in the following manner: determining, based on a preset correspondence between content information and an application, an application corresponding to the content information of the picture; and determining the application corresponding to the content information of the picture as the application corresponding to the picture.

Specifically, the correspondence between content information and an application may be embedded in a system, preset by the user, or obtained through model training. There may be one or more applications corresponding to the content information. For example, if the content information includes map information, an application corresponding to the map information may include a map application; or if the content information includes text information, an application corresponding to the text information may include an application such as a browser, Word, or PDF.

After obtaining the content information of the picture, the terminal device determines, based on the preset correspondence between content information and an application, the application corresponding to the content information. For example, if the content information of the picture includes map information, the terminal device determines that the application is a map application, and determines the determined map application as the application corresponding to the picture.

Further, if there are at least two determined applications corresponding to the content information of the picture, the determining the application corresponding to the content information of the picture as the application corresponding to the picture includes: displaying an application selection interface based on the first touch operation, where the application selection interface includes at least two applications corresponding to the content information of the picture; receiving a second touch operation performed in the application selection interface, where the second touch operation is used to instruct the user to select a target application from the at least two applications; and determining the target application as the application corresponding to the picture.

Specifically, if the terminal device determines that there are at least two applications corresponding to the content information of the picture, the at least two determined applications are displayed in the application selection interface, so that the user performs selection based on an actual requirement of the user. This can improve flexibility of determining the application.

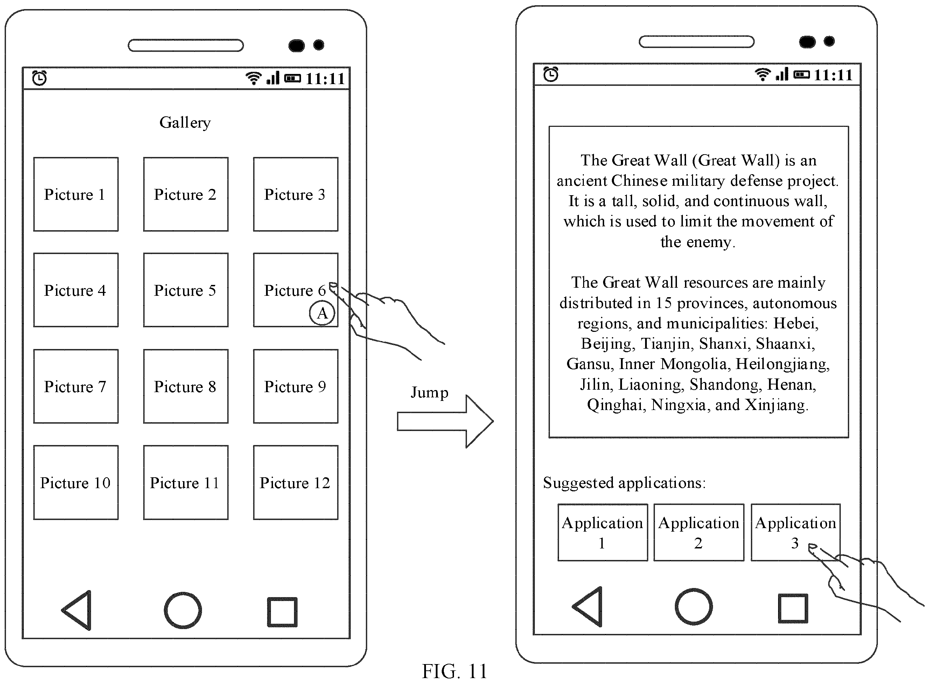

FIG. 11 is a schematic diagram of an application selection interface. As shown in FIG. 11, if the user performs a first touch operation for a "picture 6" and the terminal device determines that content information of the "picture 6" includes text information, the terminal device determines, based on the correspondence between content information and an application, that an application corresponding to the "picture 6" includes an application 1, an application 2, and an application 3. For example, the application 1 may be a browser, the application 2 may be Word, and the application 3 may be PDF. The terminal device displays the application selection interface, and the application selection interface includes at least two determined applications corresponding to the content information of the picture. For example, "suggested applications: an application 1, an application 2, and an application 3" may be displayed in the application selection interface. The user may select an application in the application selection interface based on an actual requirement of the user. For example, the "application 3" is selected. After receiving a second touch operation performed by the user in the application selection interface, the terminal device determines a target application selected by the user from the at least two applications as the application corresponding to the picture. For example, the "application 3" is determined as the application corresponding to the "picture 6".

When the anchor information further includes a marked point of interest POI in the picture, the terminal device determines the application corresponding to the picture in the following manner: displaying a POI selection interface based on the first touch operation performed on the pre-stored picture, where the POI selection interface includes at least one POI in the picture; and receiving a fourth touch operation performed in the POI selection interface, where the fourth touch operation is used to instruct the user to select a target POI from the at least one POI. In this way, the terminal device determines, based on the target POI included in the anchor information, the application corresponding to the picture.

Specifically, the POI is one or more pieces of feature data in the picture. The feature data may come from longitude and latitude values, one or more addresses in a map, one or more names in a map, one or more keywords in a document, one or more pictures or other media content in a document, or any one or more pieces of feature data obtained by capturing a screenshot during playing of media content.

When saving the picture, the terminal device obtains the POI in the picture. The terminal device may recognize the content of the picture by using the image recognition method in the prior art, so as to determine the POI in the picture based on a recognition result. In addition, the POI in the picture may be alternatively determined by grabbing description information related to the picture. Alternatively, based on identification of a picture area, content in each area may be recognized, so as to recognize the POI in the picture.

In addition, in a possible implementation, when saving the picture, the terminal device may alternatively send prompt information to the user to prompt the user whether to generate a POI. If the user determines to generate the POI, the terminal device obtains the POI in the picture in any one of the foregoing manners.

Optionally, the terminal device may use all recognized POIs as the POI in the picture. Alternatively, the terminal device may send prompt information to the user, where the prompt information includes all POIs recognized by the terminal device; the user selects at least one POI based on a requirement of the user; and the terminal device determines the at least one POI selected by the user as the POI in the picture. This can improve flexibility of determining the POI.

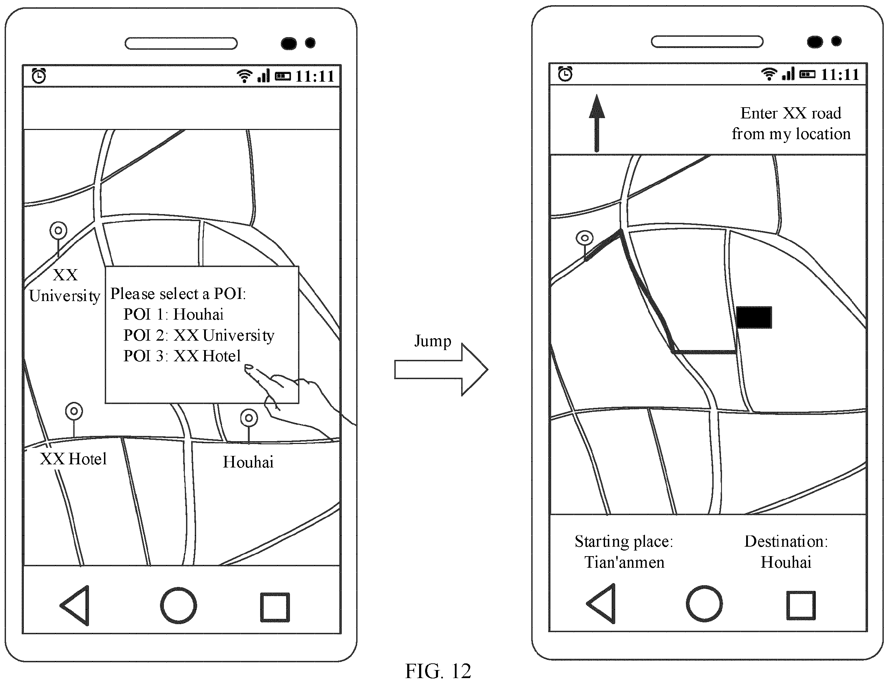

FIG. 12 is a schematic diagram of a POI selection interface. As shown in FIG. 12, after receiving the first touch operation performed by the user on the pre-stored picture, the terminal device displays a POI selection interface, where the POI selection interface includes at least one POI in the picture, for example, three POIs "Houhai", "XX University", and "XX Hotel". The user selects a target POI from the at least one POI in the POI selection interface based on an actual requirement of the user. In this case, the terminal device determines a corresponding application based on the target POI. In a specific implementation process, the application corresponding to the target POI may be determined based on a correspondence between a POI and an application, and the application corresponding to the target POI may be determined as the application corresponding to the picture.

The correspondence between a POI and an application may be manually added by the user in advance, embedded in the system, or obtained through model training. In addition, one POI may correspond to one or more applications. After the user selects the target POI, the terminal device determines, based on the correspondence between a POI and an application, the application corresponding to the target POI.

Further, after determining the application corresponding to the target POI, the terminal device displays, in the application, an operation interface corresponding to the target POI.

For example, still referring to FIG. 12, if the user selects "XX Hotel" from the POI selection interface, assuming that an application corresponding to "XX Hotel" is a map application, the terminal device starts the map application and displays, in the map application, an operation interface corresponding to the target POI. For example, the terminal device directly displays a navigation interface after starting the map application, where a starting place of navigation is a current location, and a destination is the target POI "XX Hotel".

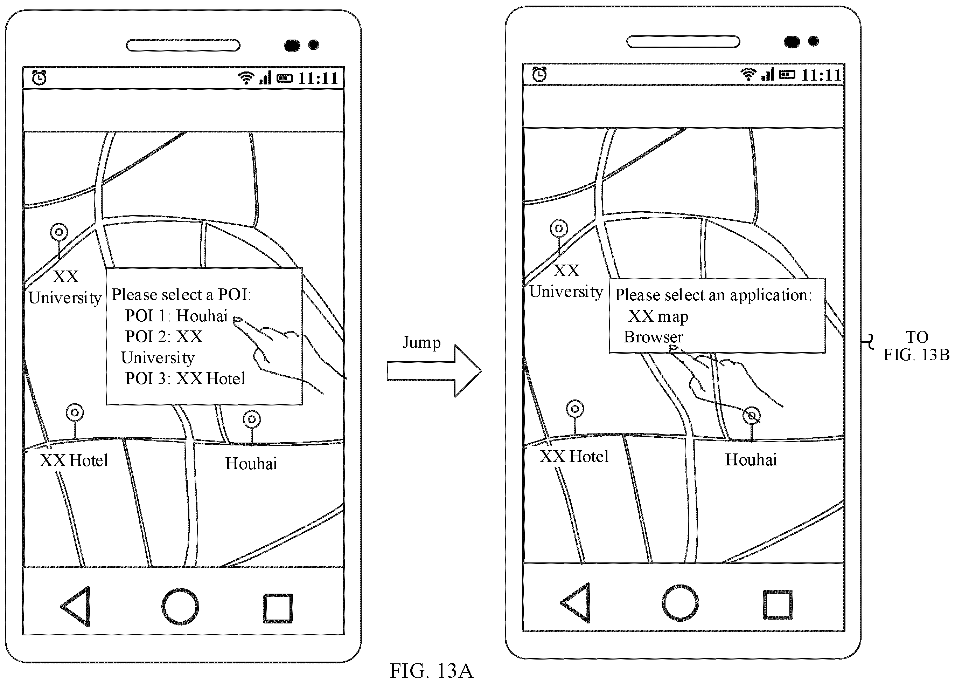

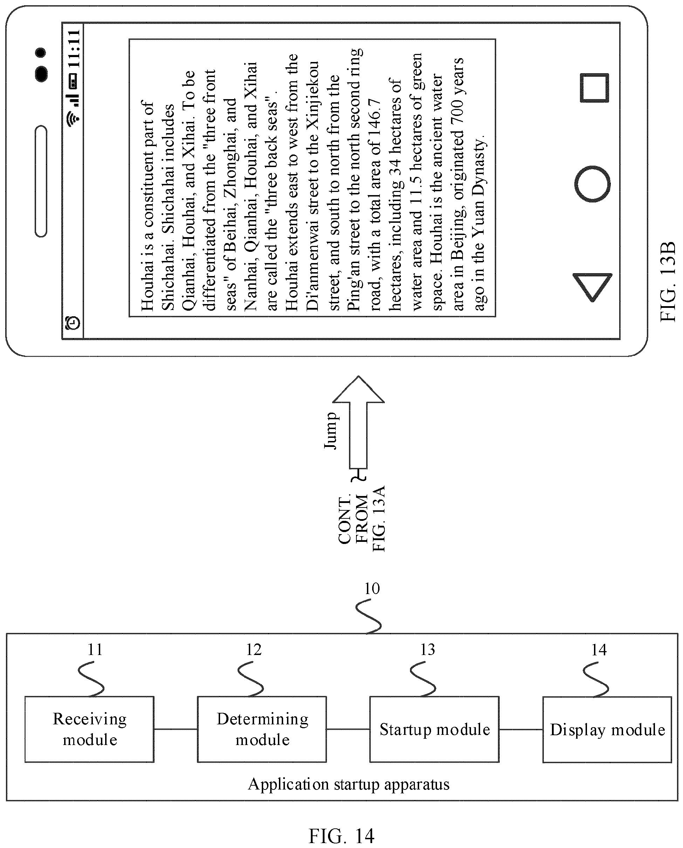

For another example, FIG. 13A and FIG. 13B are another schematic diagram of a POI selection interface. As shown in FIG. 13A and FIG. 13B, if the user selects "Houhai" from the POI selection interface, assuming that there are two applications corresponding to "Houhai": a map application and a browser, the terminal device jumps to an application selection interface. As shown in FIG. 13A and FIG. 13B, the application selection interface includes the application corresponding to the target POI, for example, the map application and the browser. The user selects an application from the application selection interface based on an actual requirement of the user, so that the terminal device starts the application selected by the user. If the user selects the browser, the terminal device directly starts the browser and displays content about Houhai in the browser. In a specific implementation process, if the user selects the browser, the terminal device needs to send, to a server, a query request carrying the target POI, and the server queries content about the target POI and returns the found content to the terminal device, so that the terminal device displays the content in the interface.

It should be noted that in actual application, after determining the target POI selected by the user, the terminal device may alternatively display, in the application, another operation interface corresponding to the target POI. For example, the terminal device may use a picture a saved in an application A to start an application B, and open an operation interface of a picture b corresponding to the picture a. For example, the terminal device uses a picture of a butterfly flapping wings in a media player A to search for and match a searchable butterfly specimen of such type recorded on the Internet. In addition, the terminal device may alternatively use a picture a for an image of media being played in a media player to search for more extensive information content of the media, so as to display the found information content on an operation interface. The terminal device may alternatively use a picture a for a location being opened in a map application to search for and match any one of POIs within a range of the picture a, so as to open an operation interface corresponding to the POI.

According to the application startup method provided in the embodiments of this application, after receiving the first touch operation for the picture, the terminal device determines, based on the anchor information related to the picture, the application corresponding to the picture, where the anchor information includes at least one of the following information: the identification information of the application to which the picture belongs, and the content information of the picture; and starts the application corresponding to the picture, and displays, in the application, the operation interface corresponding to the picture. After receiving the first touch operation of the user for the picture, the terminal device may determine, based on the anchor information related to the picture, the application corresponding to the picture, and start the application. In this way, when needing to open a plurality of applications, the user can quickly start corresponding applications by using a plurality of stored pictures, avoiding a phenomenon that the user needs to search all installed applications in the prior art. This can simplify an operation of opening the applications by the user, thereby improving user experience.

FIG. 14 is a schematic structural diagram of an application startup apparatus 10 according to an embodiment of this application. Referring to FIG. 14, the application startup apparatus 10 may include:
a receiving module 11, configured to receive a first touch operation for a picture;
a determining module 12, configured to: after the first touch operation for the picture is received, determine, based on anchor information related to the picture, an application corresponding to the picture, where the anchor information includes at least one of the following information: identification information of the application to which the picture belongs, and content information of the picture;
a startup module 13, configured to start the application corresponding to the picture; and
a display module 14, configured to display, in the application, an operation interface corresponding to the picture.

The anchor information includes the identification information of the application to which the picture belongs; and
the determining module 12 is specifically configured to:
determine an application corresponding to the identification information as the application corresponding to the picture.

The anchor information includes the content information of the picture; and
the determining module 12 is specifically configured to:
determine, based on a preset correspondence between content information and an application, an application corresponding to the content information of the picture; and
determine the application corresponding to the content information of the picture as the application corresponding to the picture.

There are at least two applications corresponding to the content information of the picture; and
the determining module 12 is specifically configured to:
display an application selection interface based on the first touch operation, where the application selection interface includes at least two applications corresponding to the content information of the picture;
receive a second touch operation performed in the application selection interface, where the second touch operation is used to instruct a user to select a target application from the at least two applications; and
determine the target application as the application corresponding to the picture.

Optionally, the receiving module 11 is further configured to receive a third touch operation performed on an application icon, where the application icon corresponds to anchor information related to at least one picture;
the display module 14 is further configured to display an anchor selection interface for the picture based on the third touch operation, where the anchor selection interface includes the anchor information related to the at least one picture; and
the receiving module 11 is further configured to receive the first touch operation performed in the anchor selection interface.

The receiving module 11 is specifically configured to:
receive the first touch operation performed on the pre-stored picture.

The anchor information further includes a marked point of interest POI in the picture;
the display module 14 is further configured to display a POI selection interface based on the first touch operation, where the POI selection interface includes at least one POI in the picture;
the receiving module 11 is further configured to receive a fourth touch operation performed in the POI selection interface, where the fourth touch operation is used to instruct the user to select a target POI from the at least one POI; and
the determining module 12 is further configured to determine, based on the target POI included in the anchor information, the application corresponding to the picture.

Optionally, the determining module 12 is specifically configured to:
determine, based on a correspondence between a POI and an application, an application corresponding to the target POI; and
determine the application corresponding to the target POI as the application corresponding to the picture.

Optionally, the display module 14 is specifically configured to:
display, in the application corresponding to the picture, an operation interface corresponding to the target POI.

The application startup apparatus in this embodiment of this application may execute the technical solution of the application startup method in any one of the foregoing embodiments. An implementation principle and a beneficial effect of the application startup apparatus are similar to those of the application startup method, and details are not described herein.

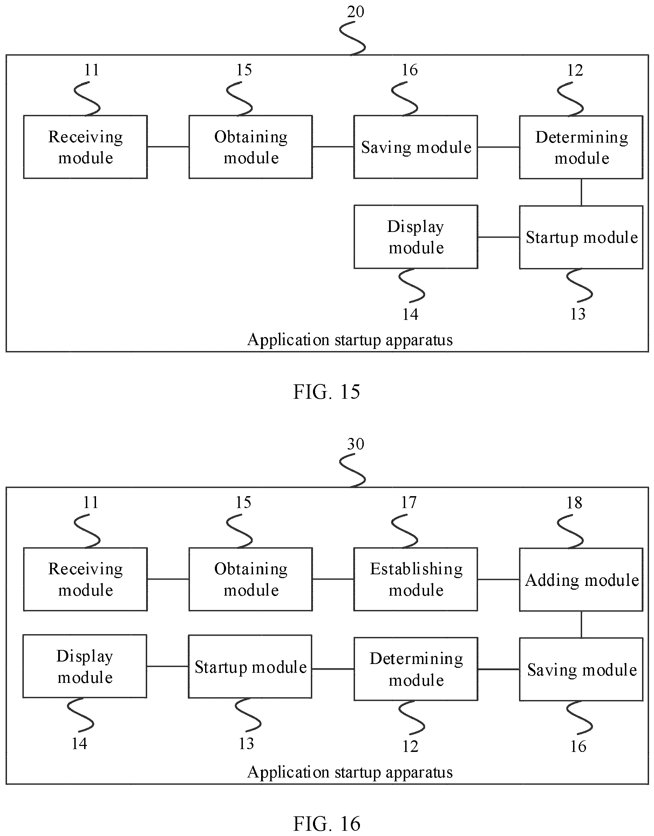

FIG. 15 is another schematic structural diagram of an application startup apparatus 20 according to an embodiment of this application. Based on the embodiment shown in FIG. 14, the apparatus further includes an obtaining module 15 and a saving module 16.

The receiving module 11 is configured to receive a fifth touch operation for saving the picture.

The obtaining module 15 is configured to obtain, based on the fifth touch operation, the anchor information related to the picture.

The saving module 16 is configured to save the picture and the anchor information related to the picture.

Optionally, the saving module 16 is specifically configured to:
display a prompt interface based on the fifth touch operation, where the prompt interface includes prompt information, and the prompt information is used to prompt the user whether to save the picture and the anchor information related to the picture;
receive a sixth touch operation performed in the prompt interface; and
save, based on the sixth touch operation, the picture and the anchor information related to the picture.

Optionally, the saving module 16 is specifically configured to:
determine, based on the sixth touch operation, the identification information of the application to which the picture belongs;
determine, based on the identification information of the application to which the picture belongs, whether there is a picture list corresponding to the identification information; and
if there is the picture list corresponding to the identification information, add the picture and the anchor information corresponding to the picture to the picture list.

FIG. 16 is still another schematic structural diagram of an application startup apparatus 30 according to an embodiment of this application. Based on the embodiment shown in FIG. 15, the apparatus further includes an establishing module 17 and an adding module 18.

The establishing module 17 is configured to: if there is no picture list corresponding to the identification information, establish a picture list corresponding to the identification information.

The adding module 18 is configured to add the picture and the anchor information corresponding to the picture to the established picture list.

The application startup apparatus in this embodiment of this application may execute the technical solution of the application startup method in any one of the foregoing embodiments. An implementation principle and a beneficial effect of the application startup apparatus are similar to those of the application startup method, and details are not described herein.

Module division in the embodiments of this application is an example and is merely logical function division, and may be other division during actual implementation. In addition, functional modules in the embodiments of this application may be integrated into one processor or may exist alone physically, or two or more modules may be integrated into one module. The integrated module may be implemented in a form of hardware, or may be implemented in a form of a software functional module.

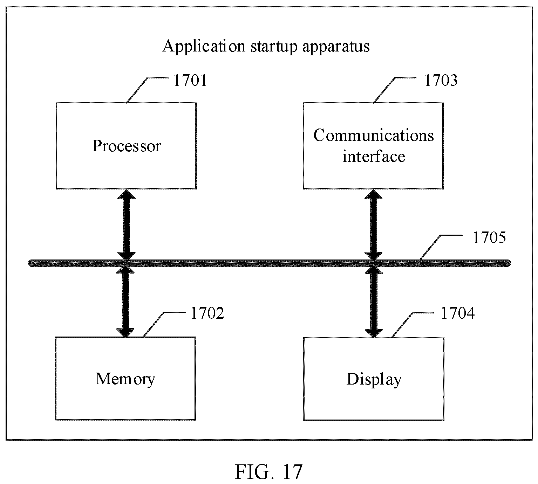

As shown in FIG. 17, when implemented in the form of hardware, the integrated module may include a processor 1701, a memory 1702, a communications interface 1703, and a display 1704. Physical hardware corresponding to the receiving module 11 may be the communications interface 1703, and physical hardware corresponding to the determining module 12 and the startup module 13 may be the processor 1701. Physical hardware corresponding to the display module 14 may be the display. The processor 1701 may be a central processing unit (English: central processing unit, CPU for short), a digital processing unit, or the like. The processor 1701 sends and receives data through the communications interface 1703. The memory 1702 is configured to store a program that is executed by the processor 1701.

A specific connection medium between the processor 1701, the memory 1702, the communications interface 1703, and the display 1704 is not limited in this embodiment of this application. In this embodiment of this application, the memory 1702, the processor 1701, the communications interface 1703, and the display 1704 are connected by using a bus 1705 shown in FIG. 17. The bus is represented by using a thick line in FIG. 17. A manner of connection between other components is merely an example for description, and imposes no limitation. The bus may be classified into an address bus, a data bus, a control bus, and the like. For ease of representation, only one thick line is used to represent the bus in FIG. 17, but this does not mean that there is only one bus or only one type of bus.

The memory 1702 may be a volatile memory (English: volatile memory) such as a random-access memory (English: random-access memory, RAM for short). Alternatively, the memory 1702 may be a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory 1702 is any other medium that can be used to carry or store expected program code in a command or data structure form and that can be accessed by a computer. However, this is not limited thereto. The memory 1702 may be a combination of the foregoing memories.

The processor 1701 is configured to execute program code stored in the memory 1702, and is specifically configured to perform the method described in the foregoing embodiments corresponding to FIG. 1 to FIG. 13A and FIG. 13B. For specific implementation, refer to the embodiments corresponding to FIG. 1 to FIG. 13A and FIG. 13B, and details are not described herein.

The embodiments described herein are merely used to describe and explain this application, but are not intended to limit this application.

This application further provides a storage medium, including a readable storage medium and a computer program, where the computer program is used to implement the application startup method provided in any one of the foregoing embodiments.

This application further provides a program product, where the program product includes a computer program (that is, an executable instruction), and the computer program is stored in a readable storage medium. At least one processor of a terminal device may read the computer program from the readable storage medium, and the at least one processor executes the computer program, so that the terminal device performs the application startup method provided in the foregoing implementations.

An embodiment of this application further provides an application startup apparatus, including at least one storage element and at least one processing element. The at least one storage element is configured to store a program, and when the program is executed, the application startup apparatus is enabled to perform an operation of the terminal device in any one of the foregoing embodiments.

All or some steps of the foregoing method embodiments may be implemented by a program instructing related hardware. The foregoing program may be stored in a readable memory. When the program is executed, the steps of the methods in the embodiments are performed. The memory (storage medium) includes: a read-only memory (English: read-only memory, ROM), a RAM, a flash memory, a hard disk, a solid-state drive, a magnetic tape (magnetic tape), a floppy disk (floppy disk), an optical disc (optical disc), and any combination thereof.

## Claims

1. An application startup method performed by a terminal device, comprising:
after receiving a first touch operation for a pre-stored picture, determining (201), based on anchor information related to the picture, a target application corresponding to the picture, wherein the anchor information comprises: identification information of an application corresponding to the picture and content information of the picture;
starting (202) the target application corresponding to the picture, and displaying, in the target application, an operation interface corresponding to the picture;
**characterized in that** the anchor information comprises a marked point of interest, POI, in the picture, and
wherein determining (201) the target application corresponding to the picture comprises:
displaying a POI selection interface based on the first touch operation, wherein the POI selection interface comprises at least one POI in the picture;
receiving a second touch operation performed in the POI selection interface, wherein the second touch operation is the selection of a target POI from the at least one POI;
determining that there are at least two applications corresponding to the POI of the picture;
displaying an application selection interface based on the second touch operation, wherein the application selection interface comprises the at least two applications corresponding to the POI of the picture;
receiving a third touch operation performed in the application selection interface, wherein the third touch operation is the selection of the target application from the at least two applications; and
wherein the target application is started in a specific application state based on the anchor information of the picture.

2. The method according to claim 1, wherein the displaying, in the application, an operation interface corresponding to the picture comprises:
displaying, in the application corresponding to the picture, an operation interface corresponding to the target POI.

3. The method according to claims 1 or 2, wherein before an operation instruction of the user for the picture is received, the method further comprises:
receiving a fourth touch operation for saving the picture;
obtaining, based on the fourth touch operation, the anchor information related to the picture; and
saving the picture and the anchor information related to the picture.

4. The method according to claim 3, wherein the saving the picture and the anchor information related to the picture comprises:
displaying a prompt interface based on the fourth touch operation, wherein the prompt interface comprises prompt information, and the prompt information is used to prompt the user whether to save the picture and the anchor information related to the picture;
receiving a fifth touch operation performed in the prompt interface; and
saving, based on the fifth touch operation, the picture and the anchor information related to the picture.

5. The method according to claim 4, wherein the saving, based on the fifth touch operation, the picture and the anchor information related to the picture comprises:
determining, whether there is a picture list corresponding to the identification information; and
if there is the picture list corresponding to the identification information, adding the picture and the anchor information related to the picture to the picture list.

6. The method according to claim 5, wherein the method further comprises:
if there is no picture list corresponding to the identification information, establishing a picture list corresponding to the identification information; and
adding the picture and the anchor information corresponding to the picture to the established picture list.

7. An application startup apparatus (10), comprising:
a receiving module (11), configured to receive a first touch operation for a picture;
a determining module (12), configured to: after the first touch operation for the picture is received, determine, based on anchor information related to the picture, an application corresponding to the picture, wherein the anchor information comprises at least one of the following information: identification information of the application to which the picture belongs, and content information of the picture;
a startup module (13), configured to start the application corresponding to the picture; and
a display module (14), configured to display, in the application, an operation interface corresponding to the picture;
the apparatus configured to perform the method of any of the preceding claims.

8. A computer readable storage medium (1702) storing a computer program configured to be executed by a processor (1701) to perform the method of any of claims 1 to 6.

## Patentansprüche

1. Verfahren zum Starten einer Anwendung, das durch eine Endgerätevorrichtung durchgeführt wird, umfassend:
nach Empfangen einer ersten Berührungsoperation für ein vorgespeichertes Bild, Bestimmen (201) einer Zielanwendung, die dem Bild entspricht, basierend auf Ankerinformationen, die sich auf das Bild beziehen, wobei die Ankerinformationen Folgendes umfassen: Identifikationsinformationen einer Anwendung, die dem Bild und Inhaltsinformationen des Bildes entsprechen;
Starten (202) der dem Bild entsprechenden Zielanwendung und Anzeigen einer dem Bild entsprechenden Bedienschnittstelle in der Zielanwendung;
**dadurch gekennzeichnet, dass** die Ankerinformationen einen im Bild markierten Punkt von Interesse (POI) umfassen, und
wobei das Bestimmen (201) der dem Bild entsprechenden Zielanwendung Folgendes umfasst:
Anzeigen einer POI-Auswahlschnittstelle basierend auf der ersten Berührungsoperation, wobei die POI-Auswahlschnittstelle mindestens einen POI im Bild umfasst;
Empfangen einer zweiten Berührungsoperation, die in der POI-Auswahlschnittstelle durchgeführt wird, wobei die zweite Berührungsoperation die Auswahl eines Ziel-POI aus dem mindestens einen POI ist;
Bestimmen, dass es mindestens zwei Anwendungen gibt, die dem POI des Bildes entsprechen;
Anzeigen einer Anwendungsauswahlschnittstelle basierend auf der zweiten Berührungsoperation, wobei die Anwendungsauswahlschnittstelle die mindestens zwei Anwendungen umfasst, die dem POI des Bildes entsprechen;
Empfangen einer dritten Berührungsoperation, die in der Anwendungsauswahlschnittstelle durchgeführt wird, wobei die dritte Berührungsoperation die Auswahl der Zielanwendung aus den mindestens zwei Anwendungen ist; und
wobei die Zielanwendung basierend auf den Ankerinformationen des Bildes in einem bestimmten Anwendungsstatus gestartet wird.

2. Verfahren gemäß Anspruch 1, wobei das Anzeigen einer dem Bild entsprechenden Bedienschnittstelle in der Anwendung Folgendes umfasst:
Anzeigen einer dem Ziel-POI entsprechenden Bedienschnittstelle in der dem Bild entsprechenden Anwendung.

3. Verfahren gemäß Anspruch 1 oder 2, wobei vor dem Empfangen einer Bedienanweisung des Benutzers für das Bild das Verfahren ferner Folgendes umfasst:
Empfangen einer vierten Berührungsoperation zum Speichern des Bildes;
Erlangen, basierend auf der vierten Berührungsoperation, der Ankerinformationen, die sich auf das Bild beziehen; und
Speichern des Bildes und der mit dem Bild verbundenen Ankerinformationen.

4. Verfahren gemäß Anspruch 3, wobei das Speichern des Bildes und der mit dem Bild verbundenen Ankerinformationen Folgendes umfasst:
Anzeigen einer Eingabeaufforderungsschnittstelle basierend auf der vierten Berührungsoperation, wobei die Eingabeaufforderungsschnittstelle
Eingabeaufforderungsinformationen umfasst und die Eingabeaufforderungsinformationen verwendet werden, um den Benutzer aufzufordern, das Bild und die Ankerinformationen in Bezug auf das Bild zu speichern;
Empfangen einer fünften Berührungsoperation, die in der Eingabeaufforderungsschnittstelle durchgeführt wird; und
Speichern, basierend auf der fünften Berührungsoperation, des Bildes und der mit dem Bild verbundenen Ankerinformationen.

5. Verfahren gemäß Anspruch 4, wobei das Speichern, basierend auf der fünften Berührungsoperation, des Bildes und der mit dem Bild verbundenen Ankerinformationen Folgendes umfasst:
Bestimmen, ob es eine Bildliste gibt, die den Identifikationsinformationen entspricht; und
wenn es eine Bildliste gibt, die den Identifikationsinformationen entspricht, Hinzufügen des Bildes und der Ankerinformationen, die sich auf das Bild beziehen, zur Bildliste.

6. Verfahren gemäß Anspruch 5, wobei das Verfahren ferner Folgendes umfasst:
wenn es keine Bildliste gibt, die den Identifikationsinformationen entspricht, Erstellen einer Bildliste, die den Identifikationsinformationen entspricht; und
Hinzufügen des Bildes und der dem Bild entsprechenden Ankerinformationen zur erstellten Bilderliste.

7. Vorrichtung zum Starten einer Anwendung (10), umfassend:
ein Empfangsmodul (11), das zum Empfangen einer ersten Berührungsoperation für ein Bild konfiguriert ist;
ein Bestimmungsmodul (12), das dazu konfiguriert ist, nach dem Empfangen der ersten Berührungsoperation für das Bild basierend auf Ankerinformationen, die sich auf das Bild beziehen, eine Anwendung zu bestimmen, die dem Bild entspricht, wobei die Ankerinformationen mindestens eines der folgenden Informationen umfassen: Identifikationsinformationen der Anwendung, zu der das Bild gehört, und Inhaltsinformationen des Bildes;
ein Startmodul (13), das dazu konfiguriert ist, die dem Bild entsprechende Anwendung zu starten; und
ein Anzeigemodul (14), das dazu konfiguriert ist, in der Anwendung eine dem Bild entsprechende Bedienschnittstelle anzuzeigen;
die Vorrichtung, die dazu konfiguriert ist, das Verfahren nach einem der vorhergehenden Ansprüche durchzuführen.

8. Computerlesbares Speichermedium (1702), das ein Computerprogramm speichert, das zur Ausführung durch einem Prozessor (1701) konfiguriert ist, um das Verfahren gemäß einem der Ansprüche 1 bis 6 auszuführen.

## Revendications

1. Procédé de démarrage d'application mis en œuvre par un dispositif terminal, comprenant :
après avoir reçu une première opération tactile pour une image pré-stockée, la détermination (201), sur la base d'informations d'ancrage liées à l'image, d'une application cible correspondant à l'image, dans lequel les informations d'ancrage comprennent : des informations d'identification d'une application correspondant à l'image et des informations sur le contenu de l'image ;
le démarrage (202) de l'application cible correspondant à l'image, et l'affichage, dans l'application cible, d'une interface d'exploitation correspondant à l'image ;
**caractérisé en ce que** les informations d'ancrage comprennent un point d'intérêt marqué, POI, dans l'image, et
dans lequel la détermination (201) de l'application cible correspondant à l'image comprend :
l'affichage d'une interface de sélection de POI sur la base de la première opération tactile, dans lequel l'interface de sélection de POI comprend au moins un POI dans l'image ;
la réception d'une deuxième opération tactile effectuée dans l'interface de sélection de POI, dans lequel la deuxième opération tactile est la sélection d'un POI cible parmi l'au moins un POI ;
la détermination qu'il existe au moins deux applications correspondant au POI de l'image ;
l'affichage d'une interface de sélection d'application sur la base de la deuxième opération tactile, dans lequel l'interface de sélection d'application comprend les au moins deux applications correspondant au POI de l'image ;
la réception d'une troisième opération tactile effectuée dans l'interface de sélection d'application, dans lequel la troisième opération tactile est la sélection de l'application cible parmi les au moins deux applications ; et
dans lequel l'application cible est démarrée dans un état d'application spécifique sur la base des informations d'ancrage de l'image.

2. Procédé selon la revendication 1, dans lequel l'affichage, dans l'application, d'une interface d'exploitation correspondant à l'image comprend :
l'affichage, dans l'application correspondant à l'image, d'une interface d'exploitation correspondant au POI cible.

3. Procédé selon les revendications 1 ou 2, dans lequel avant qu'une instruction d'exploitation de l'utilisateur pour l'image ne soit reçue, le procédé comprend en outre :
la réception d'une quatrième opération tactile pour enregistrer l'image ;
l'obtention, sur la base de la quatrième opération tactile, des informations d'ancrage liées à l'image ; et
l'enregistrement de l'image et des informations d'ancrage liées à l'image.

4. Procédé selon la revendication 3, dans lequel l'enregistrement de l'image et des informations d'ancrage liées à l'image comprend :
l'affichage d'une interface d'invite sur la base de la quatrième opération tactile, dans lequel l'interface d'invite comprend des informations d'invite, et les informations d'invite sont utilisées pour demander à l'utilisateur s'il doit enregistrer l'image et les informations d'ancrage liées à l'image ;
la réception d'une cinquième opération tactile effectuée dans l'interface d'invite ; et
l'enregistrement, sur la base de la cinquième opération tactile, de l'image et des informations d'ancrage liées à l'image.

5. Procédé selon la revendication 4, dans lequel l'enregistrement, sur la base de la cinquième opération tactile, de l'image et des informations d'ancrage liées à l'image comprend :
la détermination de la question de savoir s'il existe une liste d'images correspondant aux informations d'identification ; et
s'il existe la liste d'images correspondant aux informations d'identification, l'ajout de l'image et des informations d'ancrage liées à l'image à la liste d'images.

6. Procédé selon la revendication 5, dans lequel le procédé comprend en outre :
s'il n'existe aucune liste d'images correspondant aux informations d'identification, l'établissement d'une liste d'images correspondant aux informations d'identification ; et
l'ajout de l'image et des informations d'ancrage correspondant à l'image à la liste d'images établie.

7. Appareil de démarrage d'application (10), comprenant :
un module de réception (11), configuré pour recevoir une première opération tactile pour une image ;
un module de détermination (12), configuré pour : après la réception de la première opération tactile pour l'image, déterminer, sur la base d'informations d'ancrage associées à l'image, une application correspondant à l'image, dans lequel les informations d'ancrage comprennent au moins l'une des informations suivantes : informations d'identification de l'application à laquelle appartient l'image et informations de contenu de l'image ;
un module de démarrage (13), configuré pour démarrer l'application correspondant à l'image ; et
un module d'affichage (14), configuré pour afficher, dans l'application, une interface d'exploitation correspondant à l'image ;
l'appareil étant configuré pour réaliser le procédé selon l'une quelconque des revendications précédentes.

8. Support de stockage lisible par ordinateur (1702) stockant un programme informatique configuré pour être exécuté par un processeur (1701) pour exécuter le procédé selon l'une quelconque des revendications 1 à 6.
